(19) Europäisches Patentamt
European Patent Office
Office européen des brevets

(11) **EP 3 835 797 A1**

(12) **EUROPEAN PATENT APPLICATION**

(43) Date of publication:
**16.06.2021 Bulletin 2021/24**

(51) Int Cl.:
**G01Q 30/08** (2010.01)     **G02B 21/24** (2006.01)
**H01F 7/02** (2006.01)

(21) Application number: **19215280.9**

(22) Date of filing: **11.12.2019**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
**KH MA MD TN**

(71) Applicant: **Université de Genève
1211 Genève (CH)**

(72) Inventors:
• **Kuzmenko, Alexey
1225 Chêne Bourg (CH)**
• **Poumirol, Jean-Marie
31450 Montlaur (FR)**

(74) Representative: **KATZAROV S.A.
Geneva Business Center
12 Avenue des Morgines
1213 Petit-Lancy (CH)**

(54) **MAGNET DEVICE**

(57)     The present relates to a magnet device comprising a first magnet received in a second magnet. The first magnet and said second magnet have complementary conical shapes so that said first magnet is arranged for being received in said second magnet. The second magnet has an opening leading to said first magnet when said first magnet is received in said second magnet. When the first magnet is received in the second magnet, the first magnet and the second magnet are oppositely magnetized, and the first magnet, the second magnet and the opening are aligned along a longitudinal axis of the magnet device, so that the magnetic device generates a magnetic field from the opening.

The invention further relates to a microscope comprising said magnet device and a method for retrofitting a microscope instrument using said magnet device.

Fig. 1

Printed by Jouve, 75001 PARIS (FR)

**Description**

**Technical Field**

The present invention relates to a magnet device. The invention also concerns a microscopy instrument comprising the magnet device, and a method for retrofitting a microscopy instrument using said magnet device.

**Background of the art**

In the optical microscopy (OM), there are many microscopy instruments that be equipped with a magnet to generate a magnetic field on the target sample. For instance, a magnet can be installed in OM instruments for instance infrared, Raman, photo-current or photoluminescence and magneto-optical Kerr rotation MOKE microscopy instruments.

Scanning Probe Microscopy (SPM) is another branch of microscopy that forms images of surfaces of a sample using a mechanical probe that scans over the sample. Contrary to the other branches of microscopy, the SPM creates images of the sample with the sense of contact instead of light or electrons. SPM allows the investigation of surfaces of specimen down to nanometer and even atomic resolution. In an SPM instrument, there is generally a need to apply magnetic field on the sample.

In some case, the OM is combined with the SPM, such as in scanning near-field optical microscopy SNOM, or, more specifically, scattering-type near-field optical microscopy s-SNOM. In SNOM and s-SNOM, there is also a need to apply a magnetic field on the specimen.

One challenge for applying a magnetic field in OM, or SPM, or in their combination is the need to achieve a high intensity of the magnetic field, generally above 1 Tesla while using a magnetic device of small size to fit the geometry of these experiments, typically less than 10 mm.

Although magnetic module for microscopy consisting of two oppositely magnetized component is known, the existing magnet neither provides the required intensity nor matched the required dimensions to be used in OM or SPM.

Therefore, there is a need for magnetic device suitable for OM, or SPM to overcome the limitations of existing magnets. In other words, there is a need for magnetic device able to generate a high magnetic field intensity and which is small enough to fit the geometry of OM or SPM experiments.

**Summary of the invention**

The above problems are solved at least partially by the present invention.

The invention concerns a magnet device comprising a first magnet and a second magnet, said first magnet and said second magnet having complementary conical shapes so that said first magnet is arranged for being received in said second magnet, the second magnet having an opening leading to said first magnet when said first magnet is received in said second magnet, the magnet device being characterized in that, when the first magnet is received in the second magnet, the first magnet and the second magnet are oppositely magnetized, and the first magnet, the second magnet and the opening are aligned along a longitudinal axis of the magnet device, so that the magnetic device generates a magnetic field from the opening, and in that the magnet device is arranged for generating a magnetic field from the opening of at least 1.3 T, preferably at least 1.4 T, more preferably of at least 1.5 T.

The present invention is a magnet device, i.e. a permanent magnet, comprising a first magnet received in a second magnet. The first magnet and the second magnet are oppositely magnetized but surprisingly, they assemble or couple to form the magnet device.

The second magnet comprises an opening leading to the first magnet when the first magnet is received in the second magnet. In other words, when the first magnet is received in the second magnet, the first magnet is accessible from the outside of the device through the opening of the second magnet.

Upon assembly of the first magnet into the second magnet, the first magnet is received in the second magnet, the first magnet, the second magnet and the opening are aligned along a longitudinal axis of the magnet device, and a very strong magnetic field is generated from the opening. For instance, the generated magnetic field can reach up to 1.5 T or higher

Advantageously, the magnetic field is generated from the opening towards the outside of the device. The magnetic field is guided by the opening toward outside, i.e. toward sample placed on the opening. The outside volume with a maximum magnetic field opposite the opening is easily accessible, for instance form the top when the opening is pointing upwards. Preferably, the generated magnetic field is parallel to the longitudinal axis.

In the present invention, the magnetic field is generated free from electrical current. In other words, the magnet device does not require electrical connections to generate the magnetic field.

Advantageously, the first magnet and the second magnet have conical complementary shapes. For instance, the first magnet has a conical shape and the second magnet has an anticone shape complementary to the conical shape of the first magnet.

The conical complementary shapes of the first magnet and the second magnet allow to maximize the magnetic field and minimize the total magnetic moment of the device by adjusting the conical angle. Preferably, magnetic moment is negligible or void to cancel the stray or leakage magnetic field outside the device. Advantageously, it allows to prevent damages to any electronic or mechanical elements sensitive to magnetic field in the vicinity of the magnet device, for instance in measurement systems.

In one embodiment, the first magnet has a truncated right circular cone shape extending between a base and a truncated apex, and the second magnet has a housing with an anti-cone shape matching the dimensions of said truncated right circular cone shaped first magnet, said housing comprising the opening designed for receiving the truncated apex of the first magnet. The advantage of having truncated cone is that the magnetic field is homogeneous in a circle with the diameter equal approximately to 1/3 of the diameter of the truncated section.

In an embodiment, the first magnet has an optimal cone angle $\alpha$ defined by the angle between the edge and the longitudinal axis of said first magnet, said $\alpha$ being comprised between about 30 degrees and about 70 degrees., preferably between about 50 degrees and about 60 degrees, more preferably between about 53 degrees and about 56 degrees, for instance 54 degrees or 55 degrees or 54.7 degrees, for instance between 30 and 40 degrees, for instance between 35 and 36 degrees. For instance, the optimal angle is $\alpha$ =atan($\sqrt{2}$)=54.7° or 35.3 degrees

Advantageously, the more the cone angle is close to the optimal cone angle, the more the magnetic field is maximized.

In an embodiment, the $\alpha$ is arranged for maximizing the intensity of the generated field. Maximizing the intensity of the magnetic field is important for broader range of applications.

In an embodiment, the magnet device is arranged for minimizing the total magnetic moment of the magnetic device. Minimizing the total magnetic moment of the device reduces the leakage/stray magnetic field, which is advantageous for functioning of the microscope. For a certain angle, the total magnetic moment is vanished, the value of this angle depends on the magnetic materials used for the two magnet components.

In an embodiment, the proportion between device height h and device diameter D are chosen such that the total integrated magnetic moment of the device, which is the vector sum of the integrated magnetic moments of the first magnet and the second magnet is below $1\times10^{-8}$ A m$^2$, preferably below $0.3\times10^{-8}$ A m$^2$ and more preferably below $10^{-9}$ A m$^2$.

In the present invention, the magnetic field is generated from the opening and parallel to the longitudinal axis of the device. The generated magnetic field comprised an homogenous region. Preferably the magnetic field should be homogeneous, typically within 1%, on the scale of a typical image size in the OM and the SPM, i.e. 10 - 50 microns.

Advantageously, the dimension of the homogenous magnetic field depends on the diameter of the opening. In the present invention, the diameter of the opening d is a dimension extending along a direction perpendicular to the longitudinal axis. For instance, for a diameter d, the magnetic field is homogenous (within 1% variation) within about 1/3 of d along the x axis (width of the magnetic field)

The magnetic field generated from the opening is the resulting magnetic field from the magnetic field of the first magnet and the magnetic field of the second magnet.

In one embodiment, the magnetic field generated from the opening is determined by the following formula :

$$B_x(x,z) = B_{x,\text{in}}(x,z) + B_{x,\text{out}}(x,z)$$

$$B_z(x,z) = B_{z,\text{in}}(x,z) + B_{z,\text{out}}(x,z)$$

where

$$B_{x,\text{in}}(x,z) = \frac{\mu_0 M_{\text{in}}}{4\pi} \iint_{S_{\text{in}}} \frac{dx'dz'}{x'^2} Q_x\left(\frac{x}{x'}, \frac{z-z'}{x'}\right)$$

$$B_{z,\text{in}}(x,z) = \frac{\mu_0 M_{\text{in}}}{4\pi} \iint_{S_{\text{in}}} \frac{dx'dz'}{x'^2} Q_z\left(\frac{x}{x'}, \frac{z-z'}{x'}\right)$$

$$B_{x,\text{out}}(x,z) = \frac{\mu_0 M_{\text{out}}}{4\pi} \iint_{S_{\text{out}}} \frac{dx'\,dz'}{x'^2} Q_x\left(\frac{x}{x'}, \frac{z-z'}{x'}\right)$$

$$B_{z,\text{out}}(x,z) = \frac{\mu_0 M_{\text{out}}}{4\pi} \iint_{S_{\text{out}}} \frac{dx'\,dz'}{x'^2} Q_z\left(\frac{x}{x'}, \frac{z-z'}{x'}\right),$$

where

$S_{\text{in}}$ is the cross section of the inner magnet,
$S_{\text{out}}$ is the cross section of the outer magnet

where

$$Q_x(\xi,\zeta) = C_4(\xi,\zeta) - C_3(\xi,\zeta),$$

$$Q_z(\xi,\zeta) = C_2(\xi,\zeta) - C_1(\xi,\zeta),$$

where

$$C_1(\xi,\zeta) = \frac{4}{(\rho+2\xi)^{1/2}(\rho-2\xi)} E\left(\frac{4\xi}{\rho+2\xi}\right) \qquad\qquad ,$$

$$C_2(\xi,\zeta) = \frac{4\zeta^2}{(\rho+2\xi)^{3/2}(\rho-2\xi)}\left\{\frac{4\rho}{\rho-2\xi} E\left(\frac{4\xi}{\rho+2\xi}\right) - K\left(\frac{4\xi}{\rho+2\xi}\right)\right\},$$

$$C_3(\xi,\zeta) = \frac{2\zeta}{(\rho+2\xi)^{3/2}\xi(\rho-2\xi)}\left\{\frac{\rho^2+12\xi^2}{\rho-2\xi} E\left(\frac{4\xi}{\rho+2\xi}\right) - \rho K\left(\frac{4\xi}{\rho+2\xi}\right)\right\},$$

$$C_4(\xi,\zeta) = \frac{4\zeta\xi}{(\rho+2\xi)^{3/2}(\rho-2\xi)}\left\{\frac{4\rho}{\rho-2\xi} E\left(\frac{4\xi}{\rho+2\xi}\right) - K\left(\frac{4\xi}{\rho+2\xi}\right)\right\},$$

where

$$\rho \equiv 1+\xi^2+\zeta^2,$$

$K(m)$ is the complete elliptic integral of the first kind,
$E(m)$ is the complete elliptic integral of the second kind.

In an embodiment, the opening has a diameter comprised between 0.1 mm and 3 mm, preferably between 0.1 mm and 1.5 mm, more preferably between 0.2 mm and 0.6 mm, for example 0.3 mm or 0.5 mm.
In an embodiment, the second magnet has a coercive force superior to the coercive force of the first magnet, and/or the second magnet has a residual force inferior to the residual force of the first magnet. This helps avoiding demagnetization of the second magnet, for instance the anticone magnet component close to the apex.

Preferably the generated magnetic field is stable in temperature, for instance from 50 mK up to 360 K. Advantageously, this increases the number of the device potential applications. The generated magnetic field is stable in time and in temperature unless the magnet device is demagnetized.

In one embodiment, the device further comprises a spacer placed on the opening below the sample, preferably a spacer made of material capable of tuning the generated magnetic field, for instance rare earth metal.

The spacer allows to control the generated magnetic field. For instance, the spacer allows to increase the magneticfield if it is made of a paramagnetic material with a high magnetic susceptibility to reach a magnetic field superior to 1.5T

In an embodiment, the device further comprises a coil coiled around said device, said coil coiled being aligned along said longitudinal axis. The coil permits to modulate the generated magnetic field, in particular it allows to increase the magnetic field to reach a magnetic field superior to 1.5T

In one embodiment, the external face of the first magnet and/or the second magnet is at least partially coated with a metal, for instance Au. Metal coating facilitates thermal conduction. It also provides an increased stability in various type of environments, for instance vacuum, air, humidity.

In an embodiment, the dimensions of the magnet device are :

- Between 1 mm and 20 mm height, preferably between 1 and 10 mm height, more preferably between 2 mm and 4 mm height (h), for instance 3.7 mm or 2 mm; ; and/or

- A diameter between 1 mm and 20 mm, preferably between 2 and 10 mm, more preferably between 3 mm and 6 mm diameter (D), for instance 5.5 mm or 3.5 mm ;

Thus, the magnet device has a very strong ratio magnetic field/magnet size. This is very advantageous to install said magnet in small device that requires a strong magnetic field in a limited space for installing said magnet, for instance scanning probe microscopy instrument.

In one embodiment, the product height x diameter $D^2$ (square diameter) is chosen such that the total mass of the device, which is the sum of the mass of the first magnet and the second magnet is below 5 g, preferably below 1 g and more preferably below 0.2 g . The smaller mass of the magnet makes it easier to mount it on a piezo scanner used in a microscopy instrument.

In an embodiment, the weight of the magnet device is comprised between 100 mg and 1 g, preferably between 150 mg and 750 mg, , for instance 150 mg or 600 mg. Thus, the magnet device has a very strong ratio magnetic field/weight. This is an advantage when there is a need to settle a strong magnet in an instrument while minimizing the impact on the total weight said instrument.

In one embodiment, the device further comprises displacing means for adjusting the position of the first magnet relative to the second magnet along the longitudinal axis, so that when the displacing means displaces the first magnet relative to the second magnet, the magnetic field generated from the opening varies. This provides an efficient means for controlling the intensity of the magnetic field.

In an embodiment, the displacing means comprise rotating means for rotating first magnet with respect to the second magnet and/or translation means for translating first magnet with respect to the second magnet. This provides an efficient means for controlling the intensity of the magnetic field.

In an embodiment, the first magnet has a first magnetic grade and the second magnet has a second magnetic grade, the first grade being superior to the second grade. Thus, it allows to avoid internal demagnetization.

Preferably the magnet device according to the present invention is a magnet device for a microscopy instrument, more preferably for a scanning probe microscopy instrument.

The invention also relates to a microscopy instrument comprising a magnet device according to the present invention.

Advantageously, the magnet device according to the present invention is compatible with scanning probe microscopy instrument. In other words, the magnet device can be mounted in existing scanning probe instrument, for instance a Scanning Tunnel Microscope STM, or of Atomic Force Microscope AFM

The particular advantages of the microscopy instrument are similar to the ones of the magnet device of the invention and will thus not be repeated here.

In one embodiment, the instrument further comprises means for adjusting the position of a sample analyzed by said instrument with respect to the opening, for instance on the x axis and or on the z axis, preferably a motorized device for instance a piezoelectric device.

The invention further concerns a method for retrofitting a microscopy instrument, said microscopy instrument having at least one magnet device, the method comprising replacing said magnet device with at least one magnet device according to the present invention.

Advantageously, the present invention can be used to retrofit or upgrade an existing microscope instrument to replace at least some of the magnet installed in the existing microscope instrument with the magnet device according to the invention. This allows improving the magnetic features of the microscope while minimizing the cost.

The particular advantages of the methods are similar to the ones of the magnet device of the invention and will thus not be repeated here.

In the present invention, a cone is a 3D geometric shape. It consists of a base having a shape of a circle and a curved side (or lateral surface/face) ending up in a tip called the apex or vertex. A truncated cone is named frustum. A frustum is formed from a right circular cone by cutting of the apex of the cone with a cut perpendicular of the height, forming a lower base and an upper base that are circular and paralleled.

In the present invention, the magnet device is configured to generate a magnetic field perpendicular to the sample when the sample is on the opening, and any first and second magnet's complementary conical shapes achieving this feature can be used in the present invention. Preferably, the present invention concerns right circular cone

In the present invention, the truncated cone is also named the cone. The truncated apex corresponds to the crest or tip of said truncated cone. The second magnet is also named anticone.

In the present invention, the cone angle of the first magnet correspond to the anticone angle of the second magnet.

The optimal cone angle (or the anticone angle) is preferably defined by the angle between the longitudinal axis of the cone, extending along the height of the cone, and the edge (i.e. curved side) of said cone. The cone angle can also be defined as the angle of the cone, i.e. the angle between the edges.

In the present invention, the longitudinal axis of the magnet is defined by an axis extending along respectively the height of the cone of the first magnet and the height of the anticone of the second magnet (when the first magnet is received in the second magnet).

In the present invention, the diameter of the opening is measured along a direction substantially perpendicular to the direction of the longitudinal axis of said magnetic device.

Preferably, the magnet device has an overall cylinder shape, the diameter of the base of the cylinder defining the width of said device, the height of said cylinder defining the height of the device.

The particular advantages of the methods are similar to the ones of the magnet device of the invention and will thus not be repeated here.

The embodiments describe for the magnet device also apply to the scanning probe, the microscopy instrument and the method according to the present invention mutatis mutandis.

The present invention can comprise one of the disclosed embodiment, or a combination of several embodiments.

**Brief description of the drawings**

Further particular advantages and features of the invention will become more apparent from the following non-limitative description of at least one embodiment of the invention which will refer to the accompanying drawings (drawings that are not to scale), wherein

- Figure 1 represents a section view of a magnet device according to a first embodiment with a sample to be analyzed;
- Figures 2a,b represent section views of the magnet device of figure 1 mounted in an optical microscope (fig. 2a) and in a SPM (figure 2b)
- Figures 3a to c represent section views of the magnet device of figure 1 with displacements of a sample to be analyzed and of the second magnet with respect to the first magnet;
- Figures 4a to c represent various embodiments of magnet devices according to the present invention.
- Figures 5a,b represent the variation of the magnetic field in the opening of the magnet device along the axis x (figure 5a) and z (figure 5b);
- Figures 6a,b represent the variation of the magnetic field depending on the angle $\alpha$ (figure 6a) and depending on the displacement of the first magnet (figure 6b);

**Detailed description of the invention**

The present detailed description is intended to illustrate the invention in a non-limitative manner since any feature of an embodiment may be combined with any other feature of a different embodiment in an advantageous manner. In particular, the detailed description below concerns a SPM instrument but the invention is not limited to SPM. The present invention is also suitable for any microscopy instrument equipped with a magnet to generate a magnetic field on the sample.

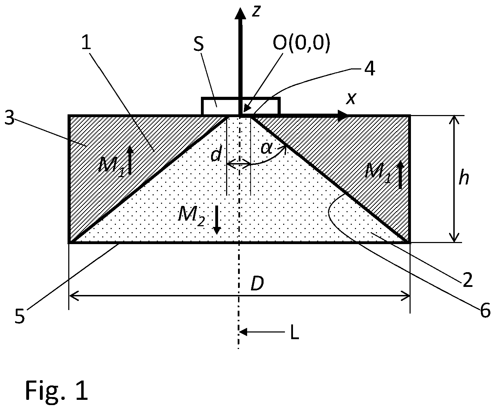

Figures 1 to 3 represent a magnet device 1 according a first embodiment. The magnet device 1 comprises a first magnet 2 and a second magnet 3. The first magnet 2 and the second magnet 3 have complementary conical shapes, so that the first magnet 2 is arranged for being received in the second magnet 3. The first and second magnet 2, 3 are axially symmetric magnetic pieces.

In the represented first embodiment, the first magnet 2 has a truncated right circular cone shape extending between a base 4 and a truncated apex 5 with the height h, conical angle $\alpha$ and the diameter d of the top (circular) surface.

The second magnet 3 has a housing 6 with an inverted cone shape complementing geometrically the first magnet 2 in such a way that together they form a cylinder of diameter D and height h when said first magnet 2 and second magnet 3 are aligned along the longitudinal axis L and said first magnet 2 is received in said housing 6 of the second magnet 3.

The first magnet 2 and the second magnet 3 are magnetized uniformly along the longitudinal axis L but in opposite directions. The materials for the first magnet 2 and the second magnet 3 can be different, for example, they can be made of NdFeB magnets of different grades: for instance a grade of N55 for the first magnet and N48 for the second magnet 3. A high magnetic field is generated in the vicinity of the point O on the axis of the device and at the top surface.

The housing 6 comprises an opening 7 designed for receiving the truncated apex 5 of the first magnet 1. A sample S can be placed and centered on the opening 6 of the second magnet 3 to be easily accessible to the scanning probe P from the top.

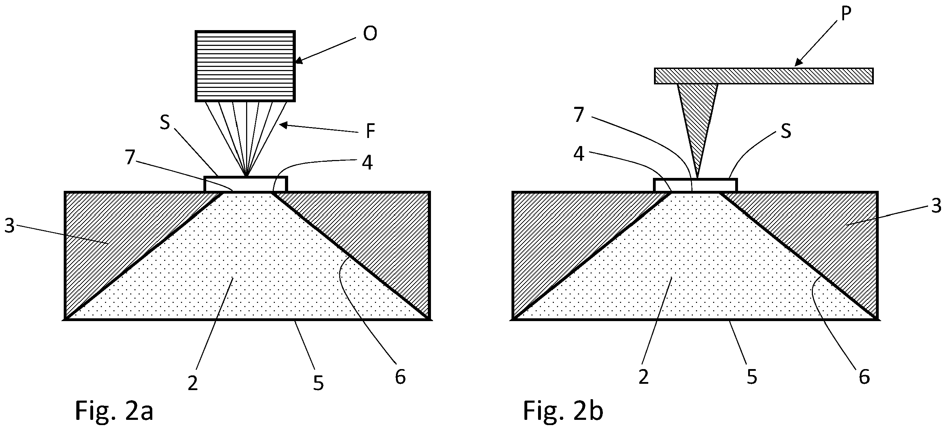

As shown in figure 2a,b, the device 1 has the following dimensions :

- Height h 3.67 mm

- Diameter D: 5.5 mm

- Diameter d (equal to the diameter of the opening 7 d): 0.3 mm

- Weight: 640 mg

- Material: first magnet 2 made of NdFeB grade N55; second magnet 3 made of NdFeB grade N48;

- Magnetic field from the opening: 1.5 T

- $\alpha$: 35.3 degrees

- $\mu_0 M_{in}$ = 1.49 A/m, $\mu_0 M_{out}$ = -1.4 A/m

In another embodiment (not shown in figures), the device has the following dimensions:

- Height h 2.0 mm

- Diameter D: 3.5 mm

- Diameter d (equal to the diameter of the opening 7 d): 0.3 mm

- Weight: 150 mg

- Material: first magnet 2 made of NdFeB grade N55; second magnet 3 made of NdFeB grade N48;

- Magnetic field from the opening: 1.5 T

- $\alpha$: 45 degrees

- $\mu_0 M_{in}$ = 1.49 A/m, $\mu_0 M_{out}$ = -1.4 A/m.

The angle of the anticone of the housing 6 correspond to the $\alpha$ so that the cone of the first magnet 2 can be received in the housing 6 to ensure a continue contact between the the cone of the first magnet 2 and the housing 6 of the anticone of the second magnet 3.

In the present embodiment, the angle of the cone of the first magnet correspond to $\alpha$ = 35.3°.

As shown in figure 2a,b, the magnet device 1 can be mounted either in an optical microscope (figure 2a) or in a scanning probe microscope (figure 2b). Optical microscopy involves illumination of the sample with focused light:

examples are optical microscopy, infrared microscopy, Raman microscopy, photoluminescence microscopy and photocurrent microscopy. SPM comprises a scanning-probe tip on a cantilever P: examples are atomic-force microscopy (AFM), magnetic-force microscopy (MFM), piezo-force microscopy (PFM). The two types of microscopy may be combined, for example in scattering-type scanning near field optical microscopy (s-SNOM) and tip-enhanced Raman scattering (TERS).

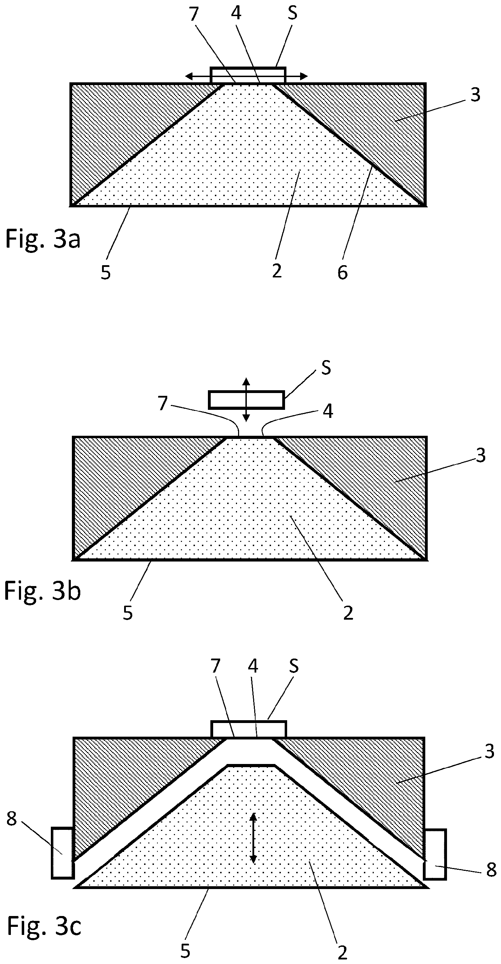

Figures 3a and b illustrate some embodiments of the invention where the sample S is moveable with respect to the opening 7 to vary the magnetic field excreted on the sample S. As shown in figure 3a, the sample S can be displaced horizontally along the surface, either by remounting it manually or using means for adjusting the position of the sample, for instance an externally controlled driving device such as a motorized device (piezoelectric device). The sample S can be displaced vertically either by adding a spacer manually or by using an externally controlled driving device as shown on figure 3b.

In figure 3c, the device can comprise displacing means 8 for displacing the first magnet with respect to the second magnet 3 and the sample S along the longitudinal axis L. This displacement may be accompanied by an additional rotation of the first magnet 2 around the longitudinal axis L. Thus, the motion of the first magnet 2 relative to the second magnet 3 induces a variation of the magnetic field generated from the opening.

The three embodiments represented in figures 3a to c can be used in combination. Overall, the design or the dimensions of the first magnet 2 and second magnet 3 can be adjusted depending on the requirements of the device manufacturing and installation in the microscope instrument.

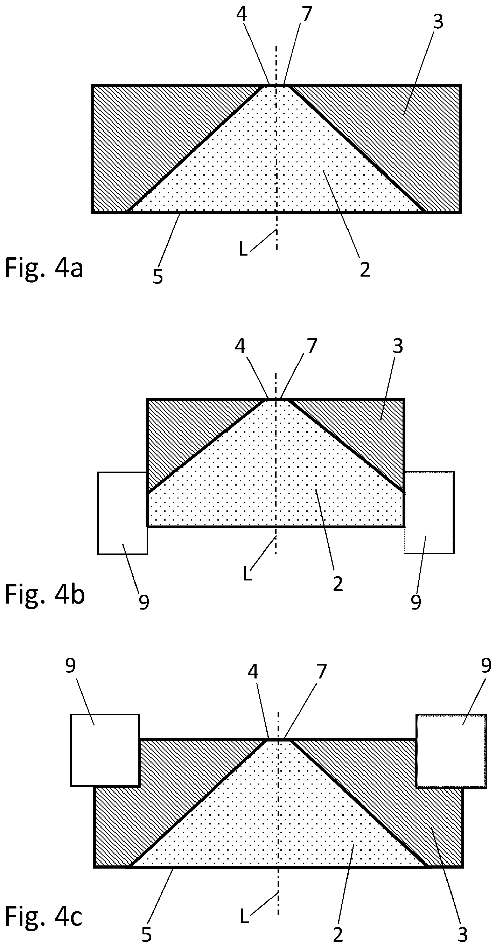

Figures 4a to c represents some embodiments of the present invention. In figure 4a, the first magnet 2 has a diameter D inferior to the diameter D of the second magnet 3. This allows to adjust the total magnetic moment of the device and simplify fitting the magnet to the existing sample holders.

In figure 4b, the first magnet 2 has a height h superior to the height h of the second magnet 3. This allows to adjust the total magnetic moment of the device and simplify fitting the magnet to the existing sample holders.

In figure 4c, the second magnet 3 further comprises a coil coiled around aligned along said longitudinal axis. The coil permits to modulate the generated magnetic field, in particular it allows to increase the magnetic field to reach a magneticfield superior to 1.5T.

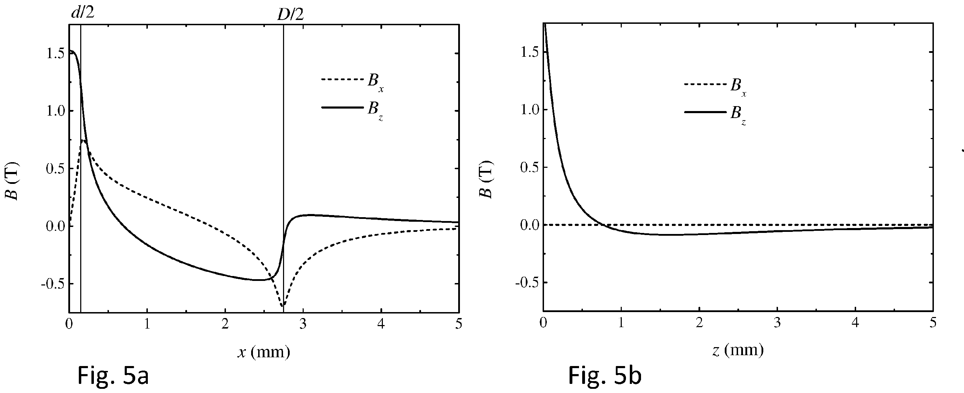

Figures 5a shows the dependence of the two components of the magnetic field ($B_x$ and $B_z$) along the sample surface (x-axis) at a height z = 0.05 mm above the surface (see figure 1 for the coordinate system). The following magnet parameters are used: D=5.5 mm, h=3.7 mm, d=0.3 mm, $\alpha$=35 degrees, $\mu_0 M_{in}$ = 1.49 A/m, $\mu_0 M_{out}$ = -1.4 A/m ($\mu_0$=4$\pi$·10-7 H/m is the permeability of vacuum).

The vertical component $B_z$ is high and nearly constant near x = 0. In particular, for 0 < x < 0.05 mm, $B_z \approx 1.5$ T and is homogeneous within 1%. For x > d/2 = 0.15 mm $B_z$ decreases quickly and becomes zero at x≈0.7 mm.

The horizontal component $B_x$ is zero in the device center (x = 0) at and below 0.2 T for x < 0.05 mm. Therefore, within a circle of the diameter of about 1/3 of d (0.1 mm in the present case), the field is high, homogeneous and almost perpendicular to the device. A working area of such a size is sufficient in most microscopy measurements.

Figure 5b shows the dependence of the two components of the magnetic field along the z-axis in the middle of the sample (x = 0). The other parameters are the same as in Figure 5a. The magnetic field is directed strictly along the z-axis ($B_x$ = 0). $B_z$ decreases very quickly with z and becomes zero at z≈0.75 mm.

The fast decrease of the magnetic field along both axes allows an efficient variation of the field intensity, for instance using the embodiments represented on figures 3a to c or figure 4a to c.

Figure 5a shows the dependence of the vertical component of the magnetic field Bz in the point x = 0, z = 0.05 mm as a function of the cone angle $\alpha$ (all other parameters being the same as in figure 5).

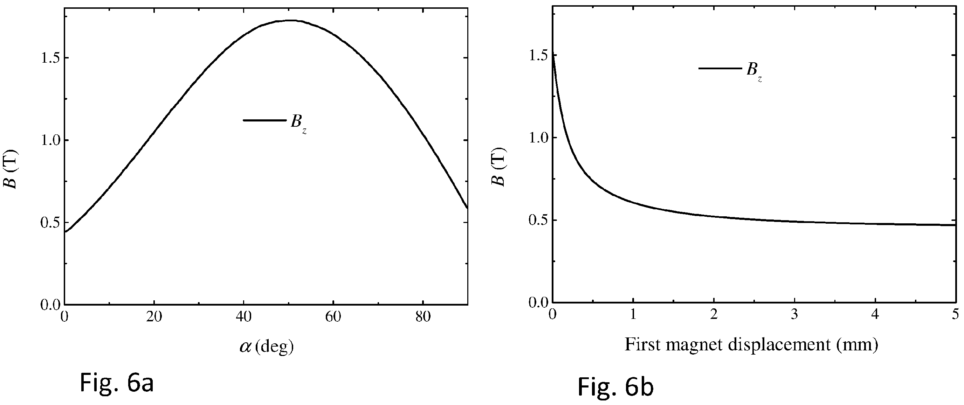

Figure 6a shows that, in this embodiment, an optimal angle $\alpha$ opt $\approx$ 50 degrees where $B_z$ is at maximum. However, the maximum is quite broad, which allows a variation of the cone angle values in broad limits according to other constraints (for example, as dictated by the fabrication process).

Figure 6b shows the dependence of $B_z$ in the same point as a function of the displacement of the first magnet 2 with respect to the sample S (all other parameters being the same as in figure 4 and 5). When the first magnet is fully out of the housing 6 of the second magnet 3, the magnetic field decreases to 0.5 T i.e. by a factor of 3. Therefore, this figure shows that moving the first magnet 2 relative to the second magnet 3 along the longitudinal axis allows to vary the magnetic field generated from the opening 7.

While the embodiments have been described in conjunction with a number of embodiments, it is evident that many alternatives, modifications and variations would be or are apparent to those of ordinary skill in the applicable arts. Accordingly, this disclosure is intended to embrace all such alternatives, modifications, equivalents and variations that are within the scope of this disclosure. This for example particularly the case regarding the different apparatuses which can be used.

**REFERENCE NUMBERS**

1    Magnet device according to a first embodiment
2    First magnet
3    Second magnet
4    Base of the first magnet
5    Apex of the first magnet
6    Housing of the second magnet
7    opening
8    Displacing means
9    Coiled coil
L    Longitudinal axis
P    Scanning probe
S    Sample
O    Optical objective
F    Focused light
d    Diameter of the opening
D    Diameter of the magnet device
α    Cone angle
h    Height of the magnet device

**Claims**

1.  Magnet device (1) comprising a first magnet (2) and a second magnet (3), said first magnet (2) and said second magnet (3) having complementary conical shapes so that said first magnet (2) is arranged for being received in said second magnet (3), the second magnet (3) having an opening (7) leading to said first magnet (2) when said first magnet (2) is received in said second magnet (3),
the magnet device (1) being **characterized in that**, when the first magnet (2) is received in the second magnet (3), the first magnet (2) and the second magnet (3) are oppositely magnetized, and the first magnet (2), the second magnet (3) and the opening (7) are aligned along a longitudinal axis (L) of the magnet device (1), so that the magnetic device (1) generates a magnetic field from the opening (7) and **in that** the magnet device (1) is arranged for generating a magnetic field from the opening (7) of at least 1.3 T, preferably at least 1.4 T, more preferably of at least 1.5 T.

2.  Magnet device (1) according to claim 1, wherein

    - the first magnet (2) has a truncated right circular cone shape extending between a base (4) and a truncated apex (5), and
    - the second magnet (3) having a housing (6) with an anti-cone shape matching the dimensions of said truncated right circular cone shaped first magnet (2), said housing (6) comprising the opening (7) designed for receiving the truncated apex (5) of the first magnet (2).

3.  Magnet device (1) according to claim 1 or 2, wherein the first magnet (2) has an optimal cone angle α defined by the angle between the edge and the longitudinal axis (L) of said first magnet (2), said α being comprised between about 30 degrees and about 70 degrees.

4.  Magnetic device (1) according to any one of claims 1 to 3, wherein the magnet device (5) is arranged for minimizing the total magnetic moment of the magnetic device (1) to limit the stray of the generated magnetic field.

5.  Magnet device (1) according to any one of claims 1 to 4, wherein the second magnet (3) has a coercive force superior to the coercive force of the first magnet (2), and/or the second magnet (3) has a residual force inferior to the residual force of the first magnet (2).

6.  Magnet device (1) according to any one of claims 1 to 5, wherein the dimensions of the magnet device (1) are:

    - Between 1 mm and 20 mm height (h), preferably between 1 and 10 mm height (h), more preferably between 2 mm and 4 mm height (h), for instance 3.7 mm or 2 mm; and/or
- A diameter (D) between 1 mm and 20 mm, preferably between 2 and 10 mm, more preferably between 3 mm and 6 mm diameter (D), for instance 5.5 mm or 3.5 mm;
- and wherein the opening (7) has a diameter comprised between 0.1 mm and 3 mm, preferably between 0.1 mm and 1.5 mm, more preferably between 0.2 mm and 0.6 mm, for example 0.3 mm or 0.5 mm.

7. Magnet device (1) according to any one of claims 1 to 6, wherein the weight of the magnet device is comprised between 100 mg and 1 g, preferably between 150 mg and 750 mg, for instance 150 mg or 640 mg.

8. Magnet device (1) according to any one of claims 1 to 7, wherein the magnet device (1) further comprises displacing means (8) for adjusting the position of the first magnet (2) relative to the second magnet (3) along the longitudinal axis (L), so that when the displacing means (8) displaces the first magnet (2) relative to the second magnet (3), the magnetic field generated from the opening (7) varies.

9. Magnet device (1) according to any one of claims 1 to 8, wherein the displacing means (8) comprise rotating means for rotating first magnet (2) with respect to the second magnet (3) and/or translation means for translating first magnet (2) with respect to the second magnet (3).

10. Magnet device (1) according to any one of claims 1 to 9, wherein the device further comprises a coil coiled (9) coupled with said device, said coil coiled (9) being aligned along said longitudinal axis (L).

11. Magnet device (1) according to any one of claims 1 to 10, wherein the external face of the first magnet (2) and/or the second magnet (3) is at least partially coated with a metal, for instance Au.

12. Magnet device (1) according to any one of claims 1 to 11, wherein the magnet device (1) further comprises a spacer placed on the opening (7), preferably a spacer made of material capable of tuning the generated magnetic field, for instance rare earth metal.

13. Microscopy instrument for analyzing a sample, said instrument comprising a magnet device (1) according to any one of claims 1 to 12.

14. Microscopy instrument according to claim 13, wherein the instrument further comprises means for adjusting the position of a sample analyzed by said instrument with respect to the opening, for instance on the x axis and/or on the z axis, preferably a motorized device for instance a piezoelectric device.

15. Method for retrofitting microscopy instrument, said instrument having at least one magnet device (1), the method comprising replacing said magnet with at least one magnet device (1) according to any one of claims 1 to 12.

Fig. 1

Fig. 2a

Fig. 2b

Fig. 3a

Fig. 3b

Fig. 3c

Fig. 4a

Fig. 4b

Fig. 4c

Fig. 5a

Fig. 5b

Fig. 6b

Fig. 6a

Europäisches
Patentamt

European
Patent Office

Office européen
des brevets

## EUROPEAN SEARCH REPORT

Application Number

EP 19 21 5280

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 10 2007 002065 A1 (BAKKER HOLDING SON BV [NL]) 10 July 2008 (2008-07-10) | 1-12 | INV.<br>G01Q30/08 |
| Y | * figures 1-4 *<br>* paragraph [0010] - paragraph [0040] * | 13-15 | G02B21/24<br>H01F7/02 |
| Y | WO 2016/024629 A1 (UNISOKU CO LTD [JP]; UNIV GUNMA NAT UNIV CORP [JP]) 18 February 2016 (2016-02-18)<br>* figures 1-4 * | 13-15 | |

TECHNICAL FIELDS
SEARCHED (IPC)

G01Q
G02B
H01F

The present search report has been drawn up for all claims

| Place of search | Date of completion of the search | Examiner |
|---|---|---|
| Berlin | 15 May 2020 | Polesello, Paolo |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 19 21 5280

This annex lists the patent family members relating to the patent documents cited in the above-mentioned European search report.
The members are as contained in the European Patent Office EDP file on
The European Patent Office is in no way liable for these particulars which are merely given for the purpose of information.

15-05-2020

| Patent document cited in search report | Publication date | Patent family member(s) | Publication date |
|---|---|---|---|
| DE 102007002065 A1 | 10-07-2008 | NONE | |
| WO 2016024629 A1 | 18-02-2016 | JP 2017181025 A<br>WO 2016024629 A1 | 05-10-2017<br>18-02-2016 |

EPO FORM P0459

For more details about this annex : see Official Journal of the European Patent Office, No. 12/82